# FASCICULE DE BREVET EUROPEEN

(11) **EP 1 035 904 B1**
(45) Date de publication et mention de la délivrance du brevet: **20.03.2002**
(21) Numéro de dépôt: 98956973.6
(22) Date de dépôt: 27.11.1998
(51) Int. Cl.: B01D 53/26, C10L 3/10

(54) **PROCEDE DE DESHYDRATATION D'UN GAZ HUMIDE AU MOYEN D'UN DESSICCANT LIQUIDE, AVEC REGENERATION POUSSEE DUDIT DESSICCANT**
VERFAHREN ZUR ENTWÄSSERUNG EINES FEUCHTEN GASES MITTELS EINER ENTWÄSSERUNGSFLÜSSIGKEIT, MIT TIEFREGENERATION DER ENTWÄSSERUNGSFLÜSSIGKEIT
METHOD FOR DEHYDRATING A WET GAS USING A LIQUID DESSICANT, WITH ADVANCED REGENERATION OF SAID DESSICANT

(30) Priorité: 02.12.1997 FR 9715268
(43) Date de publication de la demande: 20.09.2000
(73) Titulaire: Prosernat, 92084 Paris La Défense Cedex (FR)
(72) Inventeur: LANDREAU, Benoit, F-92290 Châtenay Malabry (FR); AMANDE, Jean-Claude, F-78480 Villepreux (FR)
(74) Mandataire: Andréeff, François
(86) Numéro de dépôt international: FR9802554
(87) Numéro de publication internationale: WO9928014

(56) Documents cités:
- EP-A- 0 770 667
- US-A- 3 105 748

## Description

L'invention concerne un procédé de déshydratation d'un gaz contenant de l'eau au moyen d'un dessiccant liquide selon la revendication 1. L'invention concerne plus particulièrement un procédé permettant la régénération dudit dessiccant liquide par un moyen simple, économique et n'impliquant aucune pollution de l'environnement.

La déshydratation d'un gaz, par exemple un gaz naturel ou un gaz de raffinerie, est une opération classique, qui permet de contrôler le point de rosée de l'eau dudit gaz. Cette opération permet alors d'éviter la formation d'hydrates ou de glace lors du transport ou de l'utilisation dudit gaz ou encore de réduire les risques de corrosion.

Dans ce but, il est courant de mettre en contact le gaz avec un dessiccant liquide hydrophile. Les glycols et polyglycols font partie de ces dessiccants. A cause de sa forte affinité pour l'eau, de sa stabilité chimique et de son faible coût, le triéthylèneglycol (en abrégé TEG) est le plus utilisé.

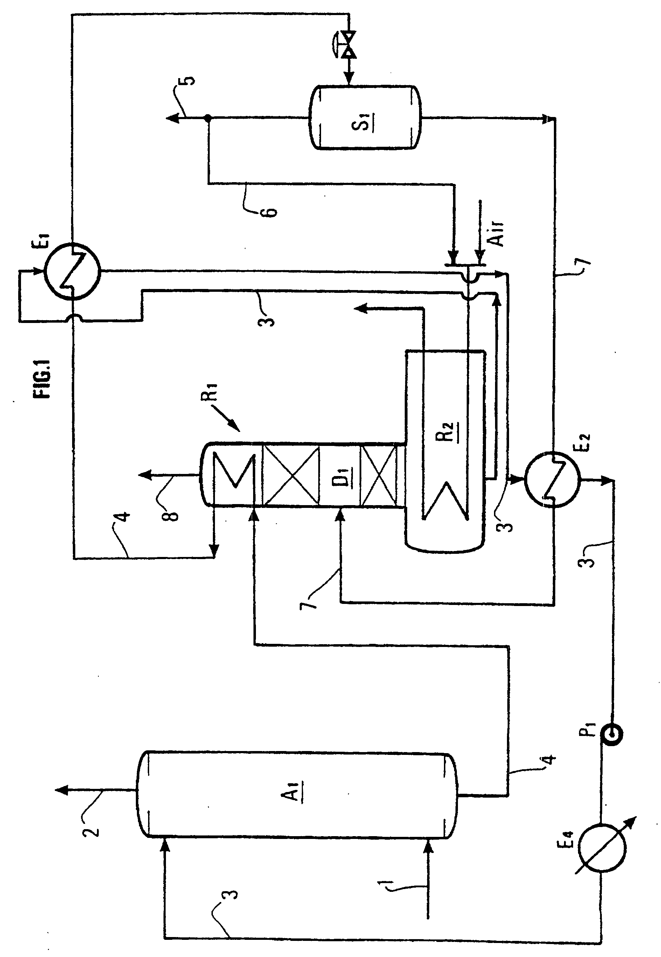

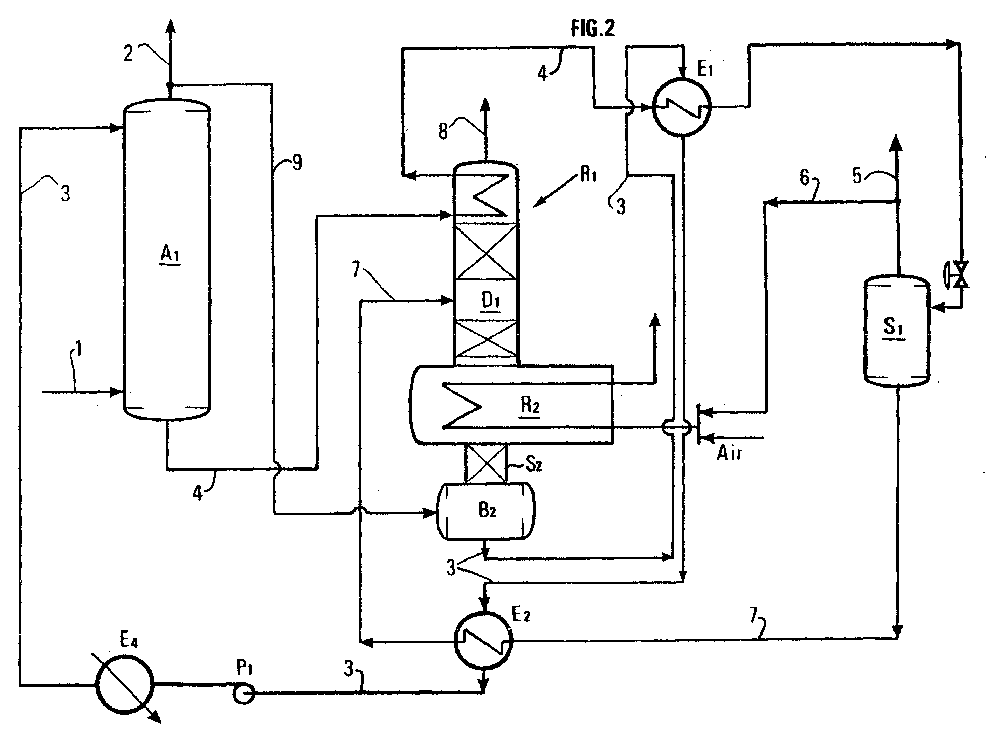

Dans une unité classique de déshydratation de gaz par un dessiccant liquide, par exemple un glycol, telle que représentée schématiquement par la figure 1 annexée, le gaz humide entre, par la ligne 1, en bas d'une colonne d'absorption A1, fonctionnant sous pression, où il contacte par circulation à contre-courant le dessiccant liquide introduit en tête par la ligne 3. Au cours de ce contact, l'eau contenue dans le gaz est absorbée par le dessiccant. Le gaz déshydraté sort, à forte pression, de la tête de la colonne d'absorption par la ligne 2. A sa sortie en fond de la colonne A1, le dessiccant chargé en eau est envoyé par la ligne 4 vers la tête de l'unité de régénération R1, où il est utilisé comme fluide de refroidissement. Il peut être encore réchauffé par passage dans un échangeur E1, puis être envoyé, après détente vers un ballon de séparation de flash S1, dans lequel la pression est plus faible que dans la colonne d'absorption A1. Dans certains cas, il est possible d'envoyer le dessiccant chargé en eau d'abord dans le ballon de séparation flash avant de l'utiliser comme fluide de refroidissement en tête de l'unité de régénération R1. Une grande partie du gaz absorbé à forte pression par le dessiccant est séparé de la phase liquide dans ce ballon S1. Ce gaz peut être soit rejeté à l'atmosphère par la ligne 5, soit utilisé comme fuel gaz au cours de l'étape de régénération du dessiccant. Il est alors envoyé vers le brûleur du rebouilleur R2 du dispositif de régénération R1.

Le dessiccant liquide contenant de l'eau, mais étant séparé du gaz absorbé à forte pression, sort du ballon de séparation flash S1 par la ligne 7. Après son passage dans au moins un échangeur de chaleur E2, où il est réchauffé, il est envoyé par la ligne 7 dans la zone de distillation du dispositif de régénération thermique R1, dans laquelle une partie de l'eau absorbée par le dessiccant va être vaporisée et éliminée en tête par la ligne 8 alors que le dessiccant régénéré qui sort en fond par la ligne 3 traverse l'échangeur E1 puis l'échangeur E2, dans lesquels il est refroidi, et est envoyé, par une pompe P1, dans un refroidisseur E4, puis en tête de la colonne d'absorption A1.

Cependant, il est bien connu que l'on ne peut séparer totalement l'eau du dessiccant par voie thermique à pression atmosphérique, surtout lorsque ce dernier se dégrade à une température inférieure à sa température normale d'ébullition. Ainsi, le TEG bout à environ 285°C, mais on se limite généralement à 204°C lors de sa régénération pour limiter sa dégradation. A cette température, la pureté du TEG régénéré est généralement voisine de 98,7 % masse.

Si l'on désire, pour le dessiccant liquide (en particulier un glycol), une pureté supérieure afin d'obtenir une déshydratation plus poussée du gaz, un moyen classique consiste à faire suivre l'étape de reconcentration thermique par une étape de strippage.

Ce strippage peut être réalisé par du gaz sec ou à faible teneur en eau, par exemple une partie du courant gazeux déshydraté par le dessiccant, comme décrit notamment dans le brevet US-A-3 105 748. Dans un tel procédé, tel que représenté schématiquement sur la figure 2, le dessiccant liquide appauvri en eau tombe par gravité du rebouilleur R2 dans la zone de strippage S2, dans laquelle il est mis en contact à contre-courant avec l'agent de strippage (le gaz déshydraté) arrivant dans le ballon B2 par la ligne 9.

Le strippage peut aussi être réalisé avec un agent de strippage liquide à température et pression ambiantes et formant un hétéroazéotrope avec l'eau, comme décrit dans le brevet FR-B-2 698 017. L'agent utilisé dans ce dernier cas est un composé aromatique (le benzène, le toluène, l'éthylbenzène et/ou un xylène) tel que l'on peut en rencontrer dans le gaz à traiter. Ce type de système entraîne une perte de gaz non commercialisé ainsi qu'une pollution supplémentaire.

Pour répondre aux nouvelles contraintes liées à l'émission de produits toxiques dans l'atmosphère, le procédé a été modifié de façon à diminuer les rejets. Cependant la réduction de ces rejets implique des investissements assez coûteux.

Une autre technique consiste à récupérer l'effluent liquide, issu du rebouilleur R2 du dispositif de régénération R1 du dessiccant liquide, dans une capacité, par le biais d'un trop-plein. Un effluent vapeur, riche en eau, et généré par ledit effluent liquide, est produite au sein de la capacité. Ladite vapeur est alors récupérée et l'effluent liquide quittant ladite capacité, peut atteindre une pureté de 99,9 % en masse. Ledit effluent liquide, appauvri en eau, est alors envoyé vers la colonne d'absorption.

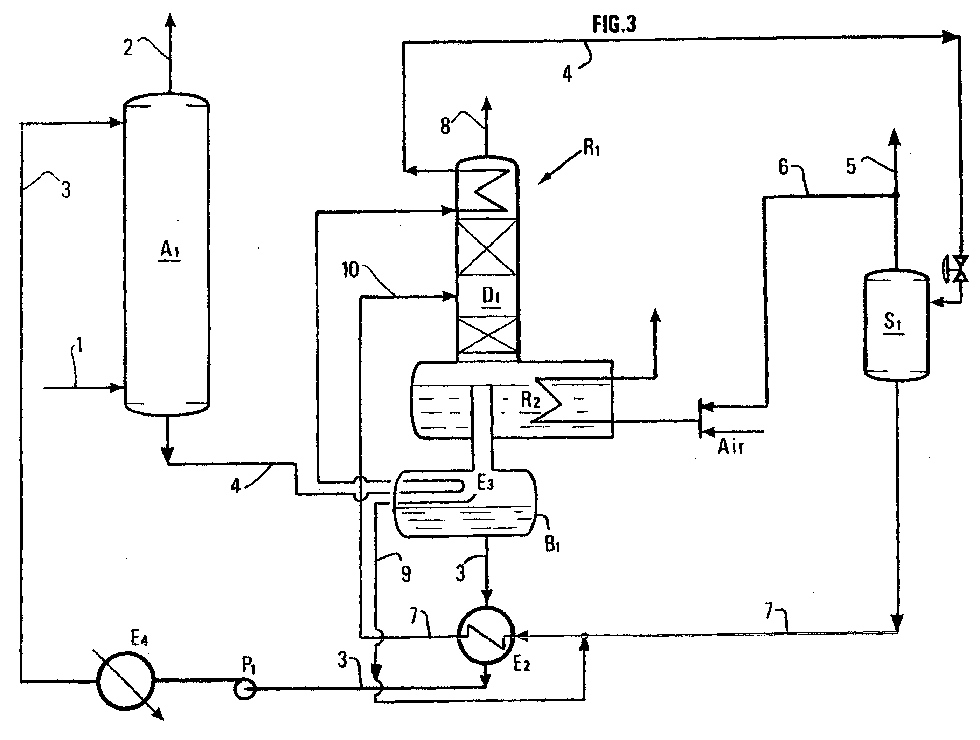

Le brevet US-A-4 332 643 décrit un procédé (connu sous la dénomination : "procédé Coldfinger"), dans lequel l'effluent vapeur est condensé sur un faisceau de tubes parcouru par une solution froide de dessiccant liquide, tel que schématiquement représenté sur la figure 3. Pour un tel procédé, le liquide du rebouilleur R2 s'écoule vers la capacité ou le ballon B1 par le biais d'un trop-plein. La vapeur, riche en eau et générée par ledit liquide du ballon B1, est condensée sur le faisceau de tubes E3. Ledit faisceau est parcouru par le dessiccant liquide, froid et riche en eau, sortant de la colonne d'absorption A1 via la ligne 4. L'effluent liquide issu de ladite vapeur condensée est récupéré et envoyé vers l'unité de régénération R1, à travers les lignes 9 puis 7 et 10. Le dessiccant liquide régénéré est récupéré par la ligne 3, pour être renvoyé, à travers l'échangeur E1, la pompe P1 et l'échangeur E4, vers la colonne d'absorption A1.

Le document EP-A-0 770 667 décrit un procédé de régénération d'un dessiccant liquide issu d'une étape de déshydratation par distillation et strippage avec comme agent de strippage des aromatiques vaporisés.

L'invention concerne un nouveau procédé permettant la diminution de la quantité d'eau du dessiccant provenant du dispositif de régénération du dessiccant. Ce nouveau procédé permet la régénération de solutions de dessiccant avec des puretés supérieures à 99,9 % en masse (c'est-à-dire moins de 0,1 % d'eau).

D'une manière générale, l'invention propose un procédé de déshydratation d'un gaz contenant de l'eau (par exemple du gaz naturel ou un gaz de raffinerie) au moyen d'un dessiccant liquide hydrophile (en particulier un glycol), avec régénération dudit dessiccant liquide, ledit procédé comprenant :
- (a) une étape d'absorption de l'eau par contact entre ledit gaz humide et du dessiccant liquide régénéré provenant de l'étape (c), produisant un effluent gazeux sec et un flux de dessiccant liquide chargé en eau et en gaz absorbés ;
- (b) une étape de régénération dudit dessiccant liquide, dans une zone de régénération comprenant une zone de rebouillage et une zone de distillation, le dessiccant liquide chargé étant envoyé dans ladite zone de distillation, d'où sort, d'une part, en tête, une vapeur contenant de l'eau et, d'autre part, en fond dans la zone de rebouillage, le dessiccant liquide contenant encore de l'eau ; et
- (c) une étape dans laquelle ledit dessiccant liquide issu de la zone de rebouillage de l'étape (b) est envoyé vers une zone d'absorption, dans laquelle de l'eau de la vapeur générée par ledit dessiccant est absorbée par une fraction de dessiccant régénéré ou non régénéré, prélevée en un point du procédé, avec renvoi dudit dessiccant ayant absorbé l'eau de ladite vapeur vers la zone de rebouillage de l'étape (b) et renvoi du dessiccant régénéré vers la zone d'absorption de l'étape (a).

La zone d'absorption de l'étape (c) peut être munie d'un moyen de chauffage intégré destiné à maintenir sensiblement à la même température le dessiccant liquide provenant de la zone de rebouillage de l'étape (b).

Bien que le procédé de l'invention puisse s'appliquer à tout gaz humide, les gaz considérés plus particulièrement dans l'invention sont le gaz naturel et les gaz de raffinerie ; ils contiennent une proportion prépondérante d'au moins un hydrocarbure léger, principalement du méthane, mais aussi de l'éthane, du propane et/ou du butane. Ils peuvent contenir en outre de faibles proportions des composés aromatiques (benzène, toluène, éthylbenzène et/ou xylènes), ainsi que du gaz carbonique, de l'azote et/ou de l'hydrogène sulfuré. A titre indicatif, la teneur en eau des gaz naturels considérés dans l'invention peut aller par exemple d'environ 30 à 10⁵ mg par Nm³

Dans le procédé de l'invention, il est possible de prévoir, après l'étape (a), une étape (d) dans laquelle on détend le dessiccant liquide chargé en eau et en gaz absorbés et on le sépare en une vapeur contenant principalement lesdits gaz absorbés et une phase liquide contenant principalement le dessiccant liquide chargé en eau.

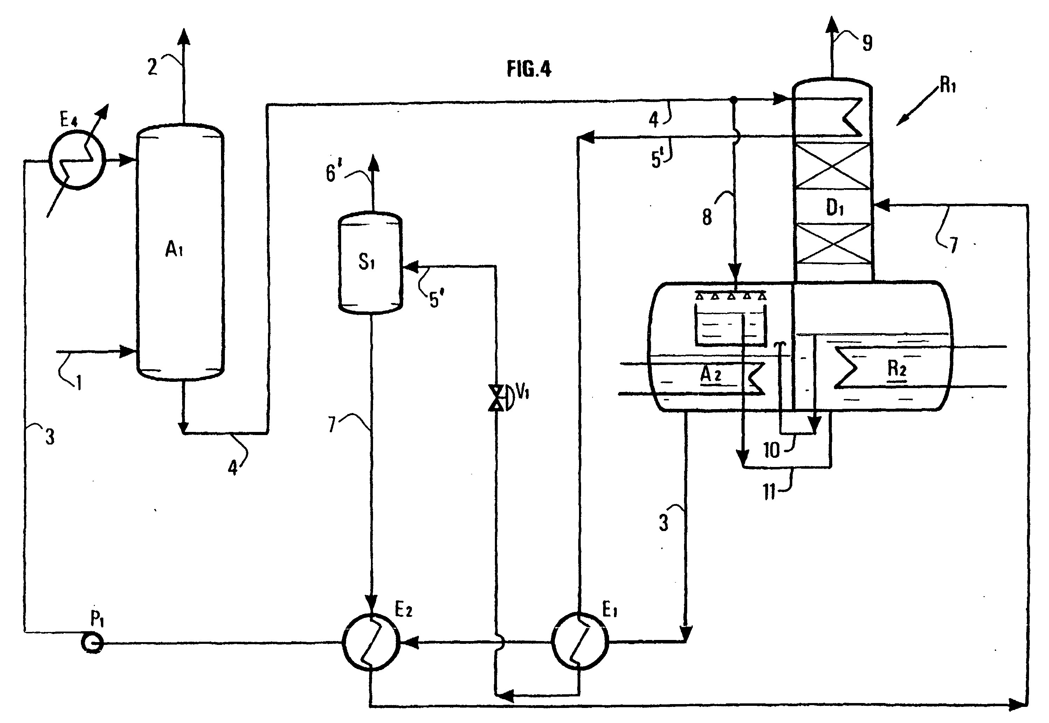

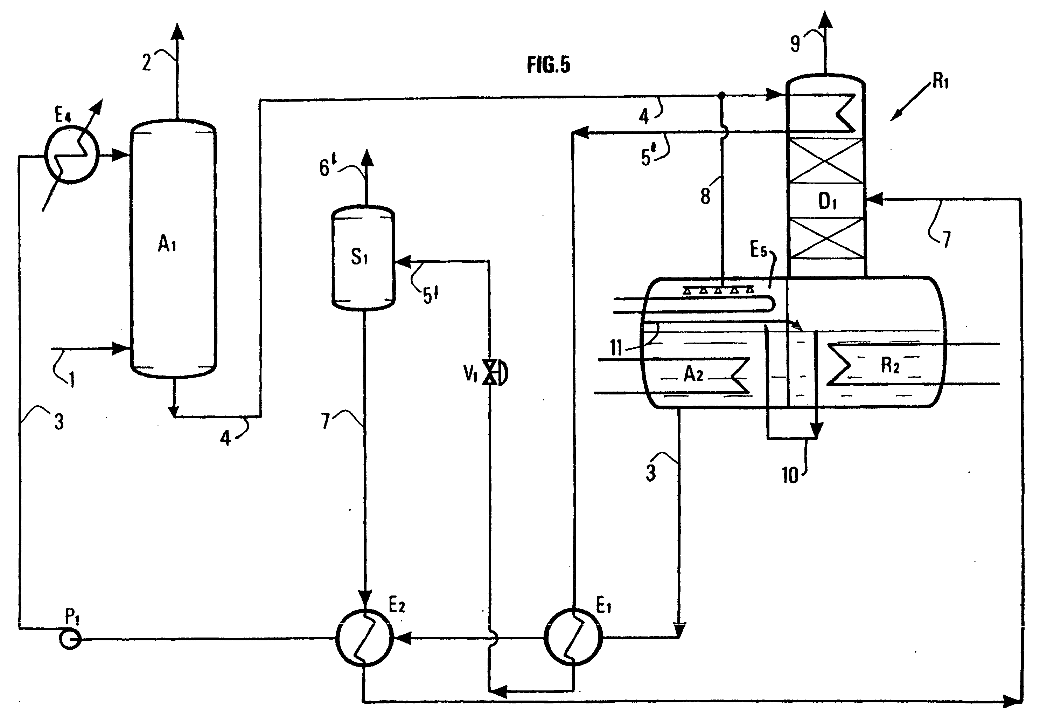

Différents modes particuliers de réalisation sont décrits ci-après plus en détail en relation avec les figures 4, 5 et 6. Dans le cas.des figures 4 et 5, l'absorption de l'eau de la vapeur générée par le liquide issu de la zone de rebouillage de l'étape (b), est effectuée, dans l'étape (c), au moyen d'une fraction de dessiccant liquide non régénéré. Par ailleurs, les indications de température et de pression données ci-après sont plus particulièrement relatives à l'utilisation du triéthylèneglycol comme dessiccant liquide.

Dans l'étape (a), le flux de gaz humide, arrivant par la ligne 1, est mis en contact à contre-courant dans une colonne d'absorption A1 avec le flux de dessiccant liquide régénéré, arrivant par la ligne 3, ce qui produit un effluent gazeux sec sortant en tête par la ligne 2 et, sortant en fond de ladite colonne d'adsorption A1, par la ligne 4, un flux de dessiccant liquide chargé en eau et en gaz absorbés en faibles quantités (hydrocarbures légers et, le cas échéant, composés aromatiques, ainsi que gaz carbonique, azote et/ou hydrogène sulfuré).

Dans cette étape, le gaz humide (par exemple du gaz naturel) entre à la pression de production (en général de 20 à 150 bars) et à une température inférieure à 50°C. Si la température de production du gaz est supérieure à cette valeur, ledit gaz sera refroidi, par exemple avec un aéro-réfrigérant (non représenté sur la figure 4 ou 5), avant son entrée dans la colonne A1.

Le dessiccant liquide introduit en tête de la colonne A1 par la ligne 3 est classiquement à une température supérieure d'environ 5°C à celle du gaz à traiter et à une pression égale à celle du gaz. Si la température du dessiccant liquide ne vérifie pas cette condition, ledit dessiccant liquide sera refroidi par le biais de l'échangeur E4 (par exemple un aéro-réfrigérant) avant son entrée dans la colonne A1. Le flux de dessiccant liquide sortant de la colonne d'adsorption A1 par la ligne 4, est en général à la température du gaz à traiter.

Une fraction dudit flux de dessiccant liquide sortant par la ligne 4 est envoyée, via la ligne 8, vers le dispositif d'absorption A2 afin de réaliser la seconde opération de régénération du dessiccant liquide chargé en eau, telle qu'elle sera décrite ci-après (étape (c)).

L'autre fraction dudit flux de dessiccant liquide est envoyée, comme fluide de refroidissement, en tête de la colonne de distillation D1 du dispositif de régénération R1, où la température de ladite fraction s'accroît en général d'environ 10°C. Ladite fraction est dirigée par la ligne 5' vers un échangeur thermique E1, dans lequel elle est réchauffée pour atteindre une température d'environ 80°C ; elle est ensuite détendue par la vanne V1 pour atteindre une pression par exemple d'environ 4 bars, puis finalement envoyée dans le ballon de séparation flash 81.

Dans l'étape (b), le flux de dessiccant liquide est envoyé, par la ligne 7, vers la colonne de distillation D1 du dispositif de régénération R1, qui comprend en outre un rebouilleur R2. Dudit dispositif de régénération R1, il sort en tête, par la ligne 9, un effluent vapeur riche en eau et pouvant contenir des composés aromatiques et, en fond, un effluent liquide constituant le dessiccant liquide partiellement régénéré (en général riche à environ 99 %), qui est envoyé vers l'absorbeur A2 à travers le trop-plein 10, pour y être soumis à la seconde opération de régénération (étape (c)).

Avant son entrée dans la colonne de distillation D1, le flux de dessiccant liquide est en général chauffé à travers l'échangeur thermique E2 pour atteindre une température d'environ 160°C.

Dans l'étape (c), l'effluent liquide sortant du trop-plein 10 (à la température de 204°C) et contenant principalement du dessiccant génère une vapeur riche en eau dans l'absorbeur A2 dans lequel la température peut être maintenue à la même valeur que dans le rebouilleur R2, par exemple au moyen d'un dispositif de chauffage intégré. L'eau contenue dans ladite vapeur est absorbée par l'effluent liquide arrivant de la colonne d'absorption A1 par la ligne 8. La mise en contact dudit effluent liquide avec ladite vapeur est réalisée par pulvérisation de celui-ci dans le ciel de l'absorbeur A2. Ledit effluent liquide, ayant absorbé ladite vapeur, est récupéré dans un compartiment de l'absorbeur A2, puis envoyé vers le rebouilleur R2 à travers le trop-plein 11. L'effluent liquide, provenant du rebouilleur et ayant subi l'étape d'absorption (c), est envoyé, à travers la ligne 3, vers la colonne A1.

L'effluent liquide sortant de l'absorbeur A2 par la ligne 3, à une température d'environ 200°C, a en général une pureté supérieure à 99,9%. Ledit effluent liquide est refroidi par passages successifs dans les deux échangeurs thermiques E1 et E2, pour atteindre une température d'environ 80°C. Sa pression est elle aussi adaptée, par une pompe P1, à celle régnant dans la colonne d'absorption A1.

Lorsque l'on met en oeuvre une étape de séparation (d), le flux de dessiccant liquide est séparé dans le ballon de séparation flash S1, en un effluent vapeur sortant en tête par la ligne 6' et contenant les gaz absorbés (hydrocarbures légers et, le cas échéant, au moins une partie des composés aromatiques, ainsi que, éventuellement, du gaz carbonique, de l'azote et/ou de l'hydrogène sulfuré) et, sortant en fond, par la ligne 7, une phase liquide contenant principalement le dessiccant liquide chargé en eau et, le cas échéant, le reste des composés aromatiques.

Différentes configurations peuvent être envisagées pour mettre en oeuvre le procédé de l'invention.

Ainsi, la température de la fraction de dessiccant liquide non régénéré prélevée en sortie de la colonne d'absorption A1 peut être trop élevée pour permettre une parfaite absorption de la phase vapeur générée par l'effluent liquide provenant du rebouilleur R2, par ladite fraction de dessiccant liquide.

Deux cas peuvent se présenter.
1) Le débit de ladite fraction de dessiccant liquide non régénéré à l'entrée de l'absorbeur A2 est faible et la température extérieure est faible : on prévoit alors de ne pas calorifuger la partie supérieure et les parois de l'absorbeur. Ladite fraction de dessiccant liquide, réalisant l'absorption de la vapeur, est pulvérisée sur les parois non calorifugées de l'absorbeur A2. Le fonctionnement du procédé de déshydratation du gaz humide (par exemple gaz naturel ou gaz de raffinerie) reste par ailleurs identique à celui décrit précédemment et représenté sur le schéma de la figure 4. Ladite fraction de dessiccant liquide, ayant absorbé ladite phase vapeur, est recueillie dans un moyen de collecte et renvoyée vers le rebouilleur R2 du dispositif de régénération R1 par le trop-plein 11.
2) Le débit de ladite fraction de dessiccant liquide non régénéré à l'entrée de l'absorbeur A2 est élevé : l'étape d'absorption (c) de la phase vapeur générée par l'effluent liquide provenant du rebouilleur R2, par ladite fraction de dessiccant liquide, est alors réalisée selon le procédé représenté schématiquement sur la figure 5, décrit ci-après.

Ladite fraction de dessiccant liquide prélevée en un point de la sortie de la colonne d'absorption A1, envoyée à l'entrée de l'absorbeur A2 suivant la ligne 8, est pulvérisée sur un échangeur thermique E5, à l'intérieur de l'absorbeur A2, sur lequel elle est refroidie. L'eau de la vapeur générée par l'effluent de dessiccant liquide provenant du rebouilleur R2 est alors absorbée par ladite fraction de dessiccant liquide ainsi refroidie. Ladite fraction de dessiccant liquide, ayant absorbé l'eau de ladite phase vapeur, est recueillie dans un moyen de collecte (par exemple au moins une lèchefrite) et envoyée vers le rebouilleur R2 du dispositif de régénération R1, par la ligne 11. La description du fonctionnement du reste du procédé de déshydratation de gaz humide (par exemple gaz naturel ou gaz de raffinerie) reste par ailleurs identique à celui décrit précédemment et représenté sur le schéma de la figure 4.

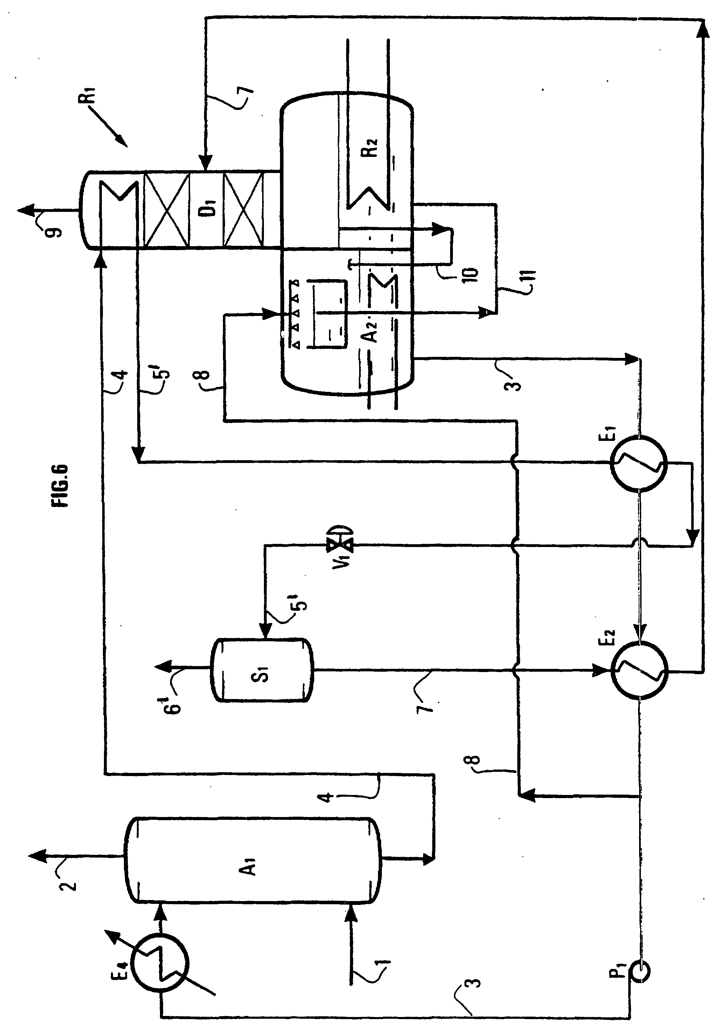

Un dernier cas envisagé consiste à réaliser l'étape de la phase d'absorption (c) de l'eau de la phase vapeur générée par le dessiccant liquide issu du rebouilleur du dispositif de régénération de l'étape (b) par du dessiccant liquide régénéré, selon le procédé décrit sur la figure 6.

Dans l'étape (c), l'effluent liquide sortant du trop-plein 10 à la température de 204°C peut être maintenu à la même température dans l'absorbeur A2 au moyen d'un dispositif de chauffage intégré. Dans l'absorbeur A2, cet effluent liquide génère une vapeur riche en eau. L'eau contenue dans ladite vapeur, générée par ledit effluent liquide contenant principalement du dessiccant, est absorbée par une fraction de dessiccant liquide régénéré prélevé par la ligne 8 sur le flux de dessiccant liquide régénéré renvoyé par la ligne 3 vers l'absorbeur A1, après refroidissement dans les échangeurs Et et E2. Ladite fraction de dessiccant liquide, pulvérisée dans le ciel de l'absorbeur A2, absorbe l'eau de ladite vapeur. Ladite fraction de dessiccant liquide, enrichie en eau, est récupéré dans un compartiment de l'absorbeur A2 puis envoyé vers le rebouilleur R2 à travers le trop-plein 11. L'effluent liquide, provenant du rebouilleur et ayant subi le second séchage, lors de l'étape (c), est envoyé, à travers la ligne 3, vers la colonne A1. La description du fonctionnement du reste du procédé de déshydratation de gaz humide (par exemple gaz naturel ou gaz de raffinerie) est par ailleurs identique à celui décrit précédemment et représenté sur le schéma de la figure 4.

Les avantages de la mise en oeuvre d'une seconde zone d'absorption telle que A2, selon le procédé de la présente invention, peuvent être évalués en effectuant une comparaison de ses performances avec celles du procédé décrit dans le brevet US-A-4 332 643 (procédé dit "Coldfinger"). En fait, le ciel gazeux de l'absorbeur A2 est beaucoup plus sec que dans le cas du procédé antérieur, ce qui a pour conséquence d'amener le dessiccant (par exemple le TEG) à une pureté supérieure à celle du dessiccant sortant du procédé "Coldfinger".

### A titre d'exemple, on peut fournir les observations suivantes:

Si l'on considère que la condensation de la vapeur générée par le dessiccant liquide issu du rebouilleur R2 est réalisée sur un faisceau de tubes parcourus par une solution de TEG riche et à 40.°C, la pression partielle de l'eau dans le ciel gazeux du ballon B1 dans le procédé représenté à la figure 3 (procédé de type "Colfinger") est alors de 0,075 bar.

Dans le cas du procédé de la présente invention, si l'on considère que la condensation de la vapeur générée par le dessiccant liquide issu du rebouilleur R2 est réalisée en pulvérisant une solution de TEG riche (pureté de 95 %) et à 40 °C, la pression partielle de l'eau dans le ciel gazeux de l'absorbeur A2 est alors de 0,015 bar.

Dans le second cas, la pression partielle en eau est beaucoup plus faible, ce qui a pour conséquence de sécher beaucoup plus le dessiccant liquide issu du rebouilleur R2. Les performances de l'absorbeur A2 dans un procédé réalisé selon la présente invention sont donc meilleures que dans un procédé du type "Coldfinger".

## Revendications

1. Procédé de déshydratation d'un gaz contenant de l'eau au moyen d'un dessiccant liquide hydrophile, avec régénération dudit dessiccant liquide, comprenant:
- (a) une étape d'absorption de l'eau par contact entre un gaz humide et du dessiccant liquide régénéré provenant de l'étape (c), produisant un effluent gazeux sec et un flux de dessiccant liquide chargé en eau et en gaz absorbés ;
- (b) une étape de régénération dudit dessiccant liquide chargé en eau dans une zone de régénération comprenant une zone de rebouillage et une zone de distillation, le dessiccant liquide chargé étant envoyé dans ladite zone de distillation, d'où sort, d'une part, en tête, une vapeur contenant de l'eau et, d'autre part, en fond dans la zone de rebouillage, le dessiccant liquide contenant encore de l'eau ; et
- (c) une étape dans laquelle ledit dessiccant liquide, issu de la zone de rebouillage de l'étape (b) et contenant encore de l'eau est envoyé vers une zone d'absorption, dans laquelle de l'eau de la vapeur générée par ledit dessiccant est absorbée par une fraction de dessiccant régénéré ou non régénéré, prélevée en un point du procédé, avec renvoi dudit dessiccant ayant absorbé l'eau de ladite vapeur vers la zone de rebouillage de l'étape (b) et renvoi du dessiccant régénéré vers la zone d'absorption de l'étape (a).

2. Procédé selon la revendication 1, **caractérisé en ce que**, dans la zone d'absorption de l'étape (c), le dessiccant provenant de la zone de rebouillage de l'étape (b) est maintenu sensiblement à la même température par un moyen de chauffage intégré.

3. Procédé selon la revendication 1 ou 2, **caractérisé en ce que** ledit gaz humide est choisi parmi le gaz naturel et les gaz de raffinerie et contient au moins un hydrocarbure léger de 1 à 4 atomes de carbone.

4. Procédé selon la revendication 3, **caractérisé en ce que** ledit hydrocarbure léger est au moins du méthane.

5. Procédé selon l'une des revendications 1 à 4, **caractérisé en ce que** le dessiccant liquide chargé issu de l'étape (a) sert de fluide de refroidissement en tête de la zone de distillation de l'étape (b).

6. Procédé selon l'une des revendications 1 à 5, **caractérisé en ce que**, après l'étape (a), on met en oeuvre une étape (d) dans laquelle on détend le dessiccant liquide chargé en eau et en gaz absorbés et on le sépare en une vapeur contenant principalement lesdits gaz absorbés et une phase liquide contenant principalement le dessiccant liquide chargé en eau.

7. Procédé selon l'une des revendications 1 à 4, **caractérisé en ce que** :
- dans l'étape (a), le flux de gaz humide arrivant par une ligne 1 est mis en contact à contre-courant dans une colonne d'absorption A1 avec le flux de dessiccant liquide régénéré arrivant par une ligne 3, ce qui produit un effluent gazeux sec sortant en tête par une ligne 2 et, sortant en fond de ladite colonne d'adsorption A1 par une ligne 4, un flux de dessiccant liquide chargé en eau et en gaz absorbés ;
- dans l'étape (b), le flux de dessiccant liquide est envoyé, par une ligne 7, vers la colonne de distillation D1 du dispositif de régénération R1, qui comprend en outre un rebouilleur R2, duquel dispositif de régénération R1, il sort en tête, par une ligne 9, un effluent vapeur riche en eau et, en fond, un effluent liquide constituant le dessiccant liquide partiellement régénéré, qui est envoyé vers l'absorbeur A2 à travers un trop-plein 10, pour y être soumis à la seconde étape de régénération (c) ; et
- dans l'étape (c), l'effluent liquide contenant principalement du dessiccant sortant du trop-plein 10 génère une vapeur riche en eau dans un absorbeur A2, ladite vapeur riche en eau est mise en contact avec l'effluent liquide arrivant de la colonne d'absorption A1 parka une ligne 8, par pulvérisation de celui-ci dans le ciel de l'absorbeur A2, ledit effluent liquide ayant absorbé ladite vapeur est récupéré et envoyé versée un rebouilleur R2 à travers le trop-plein 11 et l'effluent liquide provenant du rebouilleur et ayant subi la seconde étape d'absorption (c) est envoyé, à travers la ligne 3, vers la colonne A1.

8. Procédé selon la revendication 7, **caractérisé en ce que**, dans l'absorbeur A2, le dessiccant arrivant par le trop plein 10 est maintenu sensiblement à la même température par un moyen de chauffage intégré.

9. Procédé selon la revendication 7 ou 8, **caractérisé en ce que**, avant l'étape de séparation (d), le dessiccant liquide chargé en eau est envoyé comme fluide de refroidissement en tête de la colonne de distillation D1 du dispositif de régénération R1.

10. Procédé selon l'une des revendications 7 à 9, **caractérisé en ce que**, dans l'étape (d), le flux de dessiccant liquide est détendu par une vanne V1 et envoyé dans un ballon de séparation flash S1, où il est séparé en un effluent vapeur sortant en tête par une ligne 6' et contenant au moins une partie des gaz absorbés et une phase liquide contenant principalement le dessiccant liquide chargé en eau, sortant en fond par la ligne 7.

11. Procédé selon l'une des revendications 7 à 10, **caractérisé en ce que** la fraction de dessiccant liquide utilisée pour l'absorption de l'eau dans l'étape (c) est une fraction de dessiccant liquide non régénéré, **en ce que** la partie supérieure et les parois de l'absorbeur A2 ne sont pas calorifugées et **en ce que** la fraction de dessiccant liquide ayant absorbé la vapeur est recueillie dans un moyen de collecte et renvoyée vers le rebouilleur R2 du dispositif de régénération R1, pour y subir la régénération de l'étape (b).

12. Procédé selon l'une des revendications 7 à 10, **caractérisé en ce que** la fraction de dessiccant liquide utilisée pour l'absorption de l'eau dans l'étape (c) est une fraction de dessiccant liquide non régénéré, **en ce que** la fraction de dessiccant liquide chargé, envoyée à l'entrée de l'absorbeur A2 suivant la ligne 8, est pulvérisée sur un échangeur thermique E5, à l'intérieur de l'absorbeur A2, sur lequel elle est refroidie, et **en ce que** la fraction de dessiccant liquide ayant absorbé la vapeur est recueillie dans un moyen de collecte et envoyée vers le rebouilleur R2 du dispositif de régénération R1, pour y subir la régénération de l'étape (b).

13. Procédé selon l'une des revendications 7 à 10, **caractérisé en ce que** la fraction de dessiccant liquide utilisée dans l'étape (c) est une fraction de dessiccant liquide régénéré.

14. Procédé selon l'une des revendications 1 à 13, **caractérisé en ce que** ledit gaz comprend des proportions mineures de composés aromatiques, ainsi que du gaz carbonique, de l'azote et/ou de l'hydrogène sulfuré.

15. Procédé selon l'une des revendications 1 à 14, **caractérisé en ce que** le dessiccant liquide est un glycol.

16. Procédé selon la revendication 15, **caractérisé en ce que** le dessiccant liquide est le triéthylèneglycol.

## Patentansprüche

1. Verfahren zur Entwässerung eines Wasser enthaltenden Gases vermittels eines hydrophilen flüssigen Trocknungsmittels, unter Regeneration dieses flüssigen Trocknungsmittels, umfassend:
(a) eine Stufe der Absorption des Wassers durch Kontakt zwischen einem feuchten Gas und dem regenerierten flüssigen Trocknungsmittel aus der Stufe (c), wodurch ein trockener gasförmiger Abstrom und ein flüssiger mit Wasser und absorbierten Gasen beladener Trocknerstrom erzeugt wird;
(b) eine Stufe der Regenerierung dieses flüssigen mit Wasser beladenen Trocknungsmittels in einer Regenerierungszone, welche eine Siedezone und eine Destillationszone umfasst, wobei das beladene flüssige Trocknungsmittel in die Destillationszone geschickt wird, aus der einerseits am Kopf ein Wasser enthaltender Dampf und andererseits am Boden in der Siedezone das flüssige noch Wasser enthaltene Trocknungsmittel austritt; und andererseits am Kopf ein Wasser enthaltender Dampf und andererseits am Boden in der Siedezone das flüssige noch Wasser enthaltende Trocknungsmittel austritt; und
(c) eine Stufe, in der das flüssige aus der Siedezone der Stufe (b) stammende Trocknungsmittel, das noch Wasser enthält, zu einer Absorptionszone geschickt wird, in der Wasser und durch dieses Trocknungsmittel generierter Wasserdampf durch eine Fraktion regenerierten oder nicht regenerierten Trocknungsmittels absorbiert und an einem Punkt des Verfahrens entnommen wird, unter Zurückschicken dieses Trocknungsmittels, das Wasser aus diesem Wasserdampf absorbiert hat, gegen die Siedezone der Stufe (b) und Zurückleiten des regenerierten Trocknungsmittels gegen die Absorptionszone der Stufe (a).

2. Verfahren nach Anspruch 1, **dadurch gekennzeichnet, dass** in der Absorptionszone der Stufe (c) das aus der Siedezone der Stufe (b) stammende Trocknungsmittel im wesentlichen auf der gleichen Temperatur durch ein integriertes Heizmittel gehalten wird.

3. Verfahren nach Anspruch 1 oder 2, **dadurch gekennzeichnet, dass** dieses feuchte Gas gewählt ist aus Naturgas und den Raffineriegasen und wenigstens einen leichten Kohlenwasserstoff mit 1 bis 4 Kohlenstoffatomen enthält.

4. Verfahren nach Anspruch 3, **dadurch gekennzeichnet, dass** dieser leichte Kohlenwasserstoff wenigstens Methan ist.

5. Verfahren nach einem der Ansprüche 1 bis 4, **dadurch gekennzeichnet, dass** das flüssige beladene Trocknungsmittel aus der Stufe (a) als Kühlfluid am Kopf der Destillationszone der Stufe (b) dient.

6. Verfahren nach einem der Ansprüche 1 bis 5, **dadurch gekennzeichnet, dass** nach der Stufe (a) man eine Stufe (d) einsetzt, in der man das das flüssige mit Wasser und absorbierten Gasen beladene Trocknungsmittel entspannt und es trennt in einen hauptsächlich diese absorbierten Gase enthaltenden Dampf und eine flüssige Phase, die hauptsächlich das flüssige mit Wasser beladene Trocknungsmittel enthält.

7. Verfahren nach einem der Ansprüche 1 bis 4, **dadurch gekennzeichnet, dass**:
- in der Stufe (a) der feuchte über eine Leitung 1 ankommende Gasstrom in Gegenstromkontakt in einer Absorptionskolonne A1 mit dem regenerierten flüssigen Trocknungsmittelstrom gesetzt wird, der über eine Leitung 3 einlangt, was einen gasförmigen trockenen am Kopf über eine Leitung 2 austretenden Abstrom erzeugt und am Boden dieser Absorptionskolonne A1 über eine Leitung 4 einen flüssigen mit Wasser und absorbierten Gasen beladenen Trocknungsmittelstrom erzeugt;
- in Stufe (b) wird der Strom flüssigen Trocknungsmittels über eine Leitung 7 zur Destillationskolonne D1 der Regenerierungsvorrichtung R1 geschickt, die im übrigen eine Siedevorrichtung R2 umfasst, wobei aus dieser Regenerierungsvorrichtung R1 am Kopf über eine Leitung 9 ein an Wasser reicher Abstrom und am Boden ein flüssiger Abstrom austritt, der das flüssige teilweise regenerierte Trocknungsmittel bildet, das zum Absorber A2 über einen Überlauf 10 geschickt wird, um hierin der zweiten Regenerierungsstufe (c) ausgesetzt zu werden; und
- in Stufe (c) erzeugt der flüssige hauptsächlich Trocknungsmittel aus dem Überlauf 10 austretende Abstrom einen an Wasser reichen Dampf in einem Absorber A2, wobei der an Wasser reiche Dampf in Kontakt mit dem flüssigen aus der Absorptionskolonne A1 kommenden Abstrom über eine Leitung 8 durch Zerstäubung hiervon im Himmel des Absorbers A2 gebracht wird, wobei dieser flüssige Abstrom, der diesen Dampf absorbiert hat, rückgewonnen und gegen eine Siedevorrichtung R2 über einen Überlauf 11 geschickt wird und der flüssige aus der Siedevorrichtung stammende Abstrom, der die zweite Absorptionsstufe (c) durchlaufen hat, über die Leitung 3 zur Kolonne A1 gegeben wird.

8. Verfahren nach Anspruch 7, **dadurch gekennzeichnet, dass** im Absorber A2 das über den Überlauf 10 kommende Trocknungsmittel im wesentlichen auf der gleichen Temperatur durch ein integriertes Heizmittel gehalten wird.

9. Verfahren nach Anspruch 7 oder 8, **dadurch gekennzeichnet, dass** vor der Trennstufe (d) das mit Wasser beladene flüssige Trocknungsmittel als Kühlfluid zum Kopf der Destillationskolonne D1 der Regenerationsvorrichtung R1 geschickt wird.

10. Verfahren nach einem der Ansprüche 7 bis 9, **dadurch gekennzeichnet, dass** in der Stufe (d) der Strom flüssigen Trocknungsmittels über ein Ventil V1 entspannt wird und in einen Flashtrennballon S1 gegeben wird, wo getrennt wird in einen Dampfabstrom, der am Kopf über eine Leitung 6' austritt und wenigstens einen Teil der absorbierten Gase enthält und eine flüssige Phase, die hauptsächlich das flüssige mit Wasser beladene Trocknungsmittel enthält, die am Boden über die Leitung 7 austritt.

11. Verfahren nach einem der Ansprüche 7 bis 10, **dadurch gekennzeichnet, dass** die Fraktion des flüssigen für die Absorption des Wassers in Stufe (c) verwendeten Trocknungsmittels eine Fraktion nicht regenerierten flüssigen Trocknungsmittels ist und dass der obere Teil und die Wandungen des Absorbers A2 nicht wärmeisoliert sind und dass die Fraktion flüssigen Trocknungsmittels, das Wasserdampf absorbiert hat, in einem Sammlermittel gesammelt und gegen die Siedevorrichtung R2 der Regenerierungsvorrichtung R1 zurückgeschickt wird, um hierin die Regenerierung der Stufe (b) zu erfahren.

12. Verfahren nach einem der Ansprüche 7 bis 10, **dadurch gekennzeichnet, dass** die Fraktion flüssigen Trocknungsmittels, die für die Absorption des Wassers in Stufe (c) verwendet wird, eine Fraktion nicht regenerierten flüssigen Trocknungsmittels ist, dass die Fraktion beladenen flüssigen Trocknungsmittels, die zum Eingang des Absorbers A2 über die Leitung 8 geschickt wird, auf einem Wärmeaustauscher E5 im Inneren des Absorbers A2 zerstäubt wird, auf welchem sie gekühlt wird und dass die Fraktion flüssigen Trocknungsmittels, die den Dampf absorbiert hat, in einem Sammlermittel gesammelt und zur Siedevorrichtung R2 der Regenerierungsvorrichtung R1 geschickt wird, um hierin die Regenerierung der Stufe (b) zu erfahren.

13. Verfahren nach einem der Ansprüche 7 bis 10, **dadurch gekennzeichnet, dass** die Fraktion flüssigen in Stufe (c) verwendeten Trocknungsmittels eine Fraktion regenerierten flüssigen Trocknungsmittels ist.

14. Verfahren nach einem der Ansprüche 1 bis 13, **dadurch gekennzeichnet, dass** dieses Gas kleinere Anteile aromatischer Verbindungen sowie Kohlendioxidgas, Stickstoff und/oder Schwefelwasserstoff enthält.

15. Verfahren nach einem der Ansprüche 1 bis 14, **dadurch gekennzeichnet, dass** das flüssige Trocknungsmittel ein Glycol ist.

16. Verfahren nach Anspruch 15, **dadurch gekennzeichnet, dass** das flüssige Trocknungsmittel Triethylenglycol ist.

## Claims

1. A process for dehydrating a gas containing water which uses a hydrophilic liquid desiccant, with regeneration of said liquid desiccant, comprising:
• (a) a step for absorbing water by contact between a moist gas and regenerated liquid desiccant from step c), producing a dry gaseous effluent and a stream of liquid desiccant charged with water and absorbed gases;
• (b) a step for regenerating said liquid desiccant charged with water in a regeneration zone comprising a reboiling zone and a distillation zone, the charged liquid desiccant being sent to said distillation zone, from which a vapour containing water leaves overhead and liquid desiccant still containing water leaves from the bottom in the reboiling zone; and
• (c) a step in which said liquid desiccant from the reboiling zone of step b) and still containing water is sent to an absorption zone, in which the water in the vapour generated by said desiccant is absorbed by a fraction of regenerated or non regenerated desiccant, removed at a point in the process, returning said desiccant which has absorbed water from said vapour to the reboiling zone of step b) and returning the regenerated desiccant to the absorption zone of step a).

2. A process according to claim 1, **characterized in that** in the absorption zone of step c), the desiccant from the reboiling zone of step b) is kept at substantially the same temperature using an integral heating means.

3. A process according to claim 1 or claim 2, **characterized in that** said moist gas is selected from natural gas and refinery gases and contains at least one light hydrocarbon containing 1 to 4 carbon atoms.

4. A process according to claim 3, **characterized in that** said light hydrocarbon is at least methane.

5. A process according to any one of claims 1 to 4, **characterized in that** the charged liquid desiccant from step a) acts as a cooling fluid at the head of the distillation zone of step b).

6. A process according to any one of claims 1 to 5, **characterized in that** after step a), a step d) is carried out in which the liquid desiccant charged with water and absorbed gases is depressurised and separated into a vapour containing principally said absorbed gases and a liquid phase containing principally the liquid desiccant charged with water.

7. A process according to any one of claims 1 to 4, **characterized in that**:
• in step a), the moist gas stream arriving via a line 1 is brought into contact in an absorption column A1 with a counter-current of regenerated liquid desiccant arriving via a line 3, which produces a dry gaseous effluent leaving overhead via a line 2 and a stream of liquid desiccant charged with water and absorbed gases leaving the bottom of said absorption column A1 via a line 4;
• in step b), the stream of liquid desiccant is sent via a line 7 to a distillation column D1 of a regeneration apparatus R1, which also comprises a reboiler R2, a vapour effluent which is rich in water leaving from the head of the regeneration apparatus R1 via a line 9 and a liquid effluent constituting the partially regenerated liquid desiccant leaving from the bottom thereof, which is sent to an absorber A2 via an overflow 10 to undergo the second regeneration step c); and
• in step c), the liquid effluent leaving the overflow 10 principally containing liquid desiccant generates a vapour which is rich in water in an absorber A2, said water-rich vapour being brought into contact with liquid effluent arriving from the absorption column A1 via a line 8, by spraying it into the top of the absorber A2, said liquid effluent, having absorbed said vapour being recovered and sent to the reboiler R2 via an overflow 11 and the liquid effluent from the reboiler and which has undergone the second absorption step c) being sent to the column A1 via the line 3.

8. A process according to claim 7, **characterized in that** in the absorber A2, the desiccant arriving via the overflow 10 is kept at substantially the same temperature by means of an integral heating means.

9. A process according to claim 7 or claim 8, **characterized in that** before separation step d), the liquid desiccant charged with water is sent as a cooling fluid to the head of the distillation column D1 of the regeneration apparatus R1.

10. A process according to any one of claims 7 to 9, **characterized in that** in step d), the stream of liquid desiccant is depressurised by a valve V1 and sent to a flash separation drum S1 where it is separated into a vapour effluent leaving overhead via a line 6' and containing at least a portion of the absorbed gases and a liquid phase containing principally the liquid desiccant charged with water, leaving the bottom via line 7.

11. A process according to any one of claims 7 to 10, **characterized in that** the fraction of liquid desiccant used for absorbing water in step c) is a fraction of non regenerated liquid desiccant, and **in that** the upper portion and the walls of the absorber A2 are not insulated and **in that** the fraction of liquid desiccant which has absorbed the vapour is recovered in a collecting means and returned to the reboiler R2 of the regeneration apparatus R1, for regeneration in step b).

12. A process according to any one of claims 7 to 10, **characterized in that** the fraction of liquid desiccant used for absorbing water in step c) is a fraction of non regenerated liquid desiccant, **in that** the fraction of charged liquid desiccant which is sent to the inlet to absorber A2 via line 8 is sprayed into a heat exchanger E5 inside absorber A2 on which it is cooled, and **in that** the fraction of liquid desiccant which has absorbed the vapour is recovered in a collecting means and sent to the reboiler R2 of the regeneration apparatus R1, for regeneration in step b).

13. A process according to any one of claims 7 to 10, **characterized in that** the fraction of liquid desiccant used in step c) is a fraction of regenerated liquid desiccant.

14. A process according to any one of claims 1 to 13, **characterized in that** said gas comprises minor proportions of aromatic compounds, also carbon dioxide, nitrogen and/or hydrogen sulphide.

15. A process according to any one of claims 1 to 14, **characterized in that** the liquid desiccant is a glycol.

16. A process according to claim 15, **characterized in that** the liquid desiccant is triethylene glycol.
